# EUROPÄISCHE PATENTANMELDUNG

(11) **EP 3 042 744 A1**
(43) Veröffentlichungstag der Anmeldung: **13.07.2016**
(21) Anmeldenummer: 16150534.2
(22) Anmeldetag: 08.01.2016
(51) Int. Cl.: B27M 3/00, F16B 12/12, B32B 21/13, B27B 1/00

(54) **LAMELLEN AUS NATURHOLZ, DAMIT GEFERTIGTE BRETTER, BALKEN UND PLATTEN**

(30) Priorität: 09.01.2015 AT 112015; 18.02.2015 AT 501252015
(71) Anmelder: Johann Offner Betelligungs-Gesellschaft m.b.H., 9400 Wolfsberg (AT)
(72) Erfinder: Sachadonig, Rochus, 9400 Wolfsberg (AT)
(74) Vertreter: Wildhack & Jellinek

(57) **Zusammenfassung**

Die Erfindung betrifft neue Lamellen aus Naturholz mit durch geradlinig aufeinander zulaufende Längs-Seitenflanken begrenzten hochtrapez-förmigen, zueinander parallelen Breit- bzw. Hauptebenen, welche dadurch gekennzeichnet sind, dass deren beide zueinander parallele Hauptebenen (11, 12; 11', 12', 11", 12"), von den aufeinander zulaufenden Längs-Seitenflanken (13, 14; 13', 14", 13", 14) begrenzt, die Form von einander geometrisch ähnlichen, a) gleichschenkeligen, oder b) ungleichschenkeligen Trapezen aufweisen.

Sie betrifft weiters aus den genannten Lamellen (1, 1', 1") gebildete Bretter, mit diesen Brettern gebildete Balken und weiters Einschicht- und Mehrschichtplatten unter Mitverwendung der Lamellen 1, 1', 1 ".

## Beschreibung

Die vorliegende Erfindung betrifft grundsätzlich konische Lamellen, welche angepasst an den natürlichen Wachstumsverlauf von vorsortierten Baumstämmen in Spaner-Kreissägelinien mit Profilieraggregaten beim Einschnitt von Seitenware erhalten werden. Eine konische Lamelle zeichnet sich durch zwei parallel zueinander angeordnete Breitflächen, die gleichschenkelig trapezförmig sind, zwei senkrecht zu den Breitflächen stehende Stirnflächen, die rechteckig sind und zwei zu den Breitflächen normal stehende Schmalflächen, die ebenfalls rechteckig sind und langgestreckt einen spitzen Winkel zwischen Lamellenmittellinie und Schmalfläche bilden, aus.

Zur Fertigung von konischen Lamellen aus Seitenware wird Rundholz, wie in den üblichen Prozessen der Holzindustrie vorsortiert und entrindet, als Ausgangsprodukt verwendet. Jeder Baumstamm weist eine natürliche Verjüngung in Wuchsrichtung auf, die im Folgenden Abholzigkeit genannt wird.

Der Vorteil der Herstellung konischer Lamellen aus der Seitenware liegt in der besseren Rundholzausbeute durch Anpassung der Lamellenkontur an die Abholzigkeit vom Rundholz.

Nur als Beispiel sei eine parallelprismierte Lamelle mit den Dimensionen 35x90x4000mm und eine konische Lamelle mit gleicher Dimensionsangabe, wobei die Breite der schmalen Stirnfläche 90mm beträgt und sich die Breite der größeren Stirnfläche aus einer angenommenen Abholzigkeit von 8mm auf 1 m Länge ergibt, betrachtet. Die Steigerung des Schnittholzanteils bei dieser Dimension beträgt 15%, nimmt linear mit zunehmender Lamellenbreite ab und beträgt bei einer Dimension von 35x210x4000mm³ mit selber Abholzigkeit immer noch 7%.

Die entrindeten Baumstämme werden beispielsweise in einer Spaner- Kreissägenlinie in Längsrichtung transportiert, dabei wird in der ersten Station vom gesamten Baumstamm die Krümmung, Ausrichtung und Größe der Stirnflächen mittels 3D- Messung evaluiert. Weiters wird der Baumstamm mittels Walzen so vorpositioniert, dass das vorgegebene Schnittprofil der Hauptware über die gesamte Längsachse gewährleistet ist, ohne dass sich die äußersten Schnittlinien in x- und z- Richtung mit den natürlich gewachsenen Außenkanten des Baumstammes schneiden.

Weiters wird die kreisähnliche Kontur der beiden Stirnflächen des Baumstammes links und rechts mit Spanern abgeflacht.

Die beiden dabei entstehenden Flächen verlaufen zueinander parallel und bilden bereits die Breitflächen zweier konischer Lamellen. Weiters werden diese Flächen optisch vermessen, um die konische Besäumung im nächsten Schritt mittels Profilieraggregat so durchzuführen, dass die Besäumung innerhalb der natürlichen Waldkanten liegt, die somit weggefräst werden, wodurch eine Lamelle entsteht, die keine Waldkanten aufweist.

Die Konizität der Besäumung richtet sich nach der Abholzigkeit des vorsortierten Rundholzes. Im Besäumvorgang bewegt sich der Baumstamm in Längsrichtung normal zur Achse zweier Besäumfräser, die Fräser starten je nach Orientierung des Baumstammes, beim zuerst eintreffenden Ende mit kleinerem Durchmesser von innen nach außen, das heißt ein oberer Fräser bewegt sich in z+ (plus) Richtung und der untere Fräser bewegt sich in z- (minus) Richtung, bei zuerst eintreffendem Ende mit größerem Durchmesser umgekehrt, wobei die Bewegung der Fräser der Längsbewegung des Baumstammes proportional angepasst ist.

Durch den Besäumvorgang entstehen die Schmalflächen, normal zu den Breitflächen stehend. Zusätzlich wird beim Besäumen schon ein Teil des Trennschnittes zwischen Lamellen und Stamm ausgeführt. Schließlich wird der Trennschnitt mittels zweier Kreissägen durchgeführt, wobei dieser im Abstand der Lamellenstärke parallel zur ersten Breitfläche verläuft. Die Stärke der Lamellen richtet sich nach dem vorgegebenen Einschnittprogramm. Dieser Besäumvorgang kann mit einem Profilieraggregat bis zu sechsfach ausgeführt werden. Die konischen Lamellen sind durch das Abtrennen vom Baumstamm vorerst in allen Dimensionen, im ungetrockneten Zustand fertig bearbeitet und werden letztlich einer Sortierung zugeführt.

Der verbliebene Teil des Stammes wird um 90° gedreht in der y- Achse gedreht und ausgerichtet. Danach wiederholt sich der Span- und Besäumvorgang, bis der Querschnitt des Baumstammes ein Rechteck bildet.
Der danach übriggebliebene Baumstamm wird für den Einschnitt der Hauptware eingeteilt.

Alle bei dieser Vorgangsweise anfallenden konischen Lamellen werden sortiert und abwechselnd angeordnet mit schmaler Stirnfläche, breiter Stirnfläche, schmaler, Stirnfläche, usw., in einer Paketierung gestapelt. Zwischen den einzelnen Lagen werden Einleger zwischengelegt, um eine Luftzirkulation zwischen den Brettlagen zu ermöglichen. In der Trocknung werden die konischen Lamellen auf einen Feuchtegehalt von 8 bis 14% getrocknet.

Für eine Produktion von Einschichtplatten aus konischen Lamellen mit tragender Verleimung werden nach der Trocknung die Lamellen vereinzelt und nochmals sortiert. Dabei werden der tatsächliche Feuchtegehalt und die Sichtqualität jeder Lamelle festgestellt und fehlerhafte Lamellen gegebenenfalls ausgeschieden. Anschließend wird die Anordnung der Lamellen wieder so angepasst, dass aufeinanderfolgende Lamellen abwechselnd mit schmaler an breiter Stirnseite aneinander liegen.

Nach der Orientierung werden die Lamellen auf beiden Schmalseiten gehobelt. Dabei müssen sie zuerst entlang ihrer Mittellinie in der Breitfläche ausgerichtet werden. Nun werden die Schmalflächen mit Hobelköpfen, die sich proportional der Längsgeschwindigkeit wie beim Besäumen, je nach Orientierung der Lamellen in x+ (plus) bzw. x-(minus) Richtung bewegen, bearbeitet. Durch das Hobeln werden Unebenheiten, die aufgrund von Schwund während der Trocknung entstehen, beseitigt.

Nach dem Hobeln erfolgt ein Leimauftrag, der pro Lamelle jeweils immer nur eine Schmalfläche betrifft. Der Leimauftrag kann beispielsweise so erfolgen, dass die Lamellen zwischen zwei Anschlagflächen geführt werden und je nach Orientierung der Lamelle entweder auf die Fläche links oder rechts ausgerichtet wird.

Die Lamelle läuft so ausgerichtet weiter und nach dem Ende der Anschlagflächen ist der Leimauftrag angeordnet, der auf die Schmalflächen Leim abrollt oder aufspritzt.
In einer Presseneinheit werden die Lamellen so zusammengeführt, dass jeweils beleimte- und unbeleimte Schmalfläche der jeweils nächsten Lamelle aneinander liegen. Die Presseneinheit kann beispielsweise ein Endlospressenteppich sein, dessen Druck in x-Richtung der Lamellen konstant aufrechterhalten bleibt.

Während des Pressvorgangs wird in x- und z- Richtung der Lamellen ein konstanter Druck aufgebracht, in y- Richtung der Lamellen werden diese beidseitig geführt um ein gegenseitiges Abgleiten der Schmalflächen zu verhindern. Die Dauer des Pressvorgangs richtet sich nach der Aushärtezeit des Leims.

Nach erfolgter Verleimung werden überstehende Enden, also großteils die Stirnflächen der konischen Lamellen abgekappt, sodass letztlich ein rechteckiges Plattenformat entsteht. Die Länge der Platten ist variabel und sie werden nach Bedarf vom Endlosformat abgeschnitten. Schließlich werden die so erhaltenen Einschichtplatten in einer Abstapelanlage zu einem Paket zusammengelegt.

Was die bisher bekannten konischen Lamellen und deren Produktion betrifft, so sei hierzu beispielsweise auf die EP 2596924 A1 verwiesen.

Die Erfindung betrifft nun, wie bisher beschriebene Lamellen aus Naturholz mit durch geradlinig aufeinander zulaufende Längs-Seitenflanken begrenzten, hochtrapez-förmigen, zueinander parallelen Breit- bzw. Hauptebenen, welche jedoch **dadurch gekennzeichnet** sind, dass deren beide zueinander parallele Hauptebenen, von den aufeinander zulaufenden Längs-Seitenflanken begrenzt, die Form von einander geometrisch ähnlichen, a) gleichschenkeligen, oder b) ungleichschenkeligen Trapezen aufweisen, wobei die Lamellen entweder
a) als Lamellen mit zueinander symmetrischen, in identen, spitzen Winkeln jeweils zu den genannten Hauptebenen geneigten, schrägen Längs-Seitenflanken vorliegen und insgesamt längs-durchgehend, im Querschnitt die Form von geometrisch ähnlichen, gleichschenkeligen Trapezen aufweisen, oder
b) als Lamellen mit jeweils einer in einem spitzen Winkel zu den Hauptebenen geneigten, schrägen Seitenflanke und einer im rechten Winkel zu den genannten Hauptebenen, angeordneten senkrechten Längs-Seitenflanke vorliegen und insgesamt längs-durchgehend im Querschnitt die Form von geometrisch ähnlichen, ungleichschenkeligen Trapezen ("Halb-Trapezen") aufweisen.

Zur Steigerung des Schnittholzanteils erhalten - wie bei der konischen Lamelle - die Breitflächen ein gleichschenkelig trapezförmiges Profil, zusätzlich wird also jedoch auch das Querschnittprofil der Lamelle mit einer (un-)gleichschenkelig trapezförmigen Kontur ausgestattet.
Als Berechnungsbeispiel seien parallelprismierte und trapezkonischprismierte Lamellen mit einer Nenndimension von 35x90x4000mm bei einer angenommenen Abholzigkeit von 8mm auf 1m gegenübergestellt, wobei bei der trapezkonischen Lamelle die Länge der kürzesten Stirnkante 90mm beträgt. Das Ergebnis in dieser Dimension führt zu einer Steigerung der Schnittholzanteils um 36%, und bei einer Dimension von 35x210x4000mm zu einer solchen von immerhin noch 19,5 %.

Die Herstellung der erfindungsgemäßen trapezkonischen Lamellen läuft wie bei den bisher üblichen konischen Lamellen beim Spanen der kernabgewandten Seiten gleich ab. Nach dem Spanen der ersten beiden Breitflächen wird die Seitenware jedoch nicht besäumt, sondern vom Baumstamm getrennt und aus der Linie ausgeklinkt. Alle bis jetzt unbesäumten Lamellen werden abgestapelt und einer Trocknung zugeführt.
Nach der Trocknung werden diese unbesäumten Lamellen in einer separaten Produktionslinie verarbeitet. Dabei werden die Lamellenstapel auf eine Aufgabe gegeben, die Lamellen vereinzelt und einer Längsfördereinheit übergegeben. Weiter durchlaufen die unbesäumten Lamellen eine 3D- Vermessung, wobei die Kontur der Breit- und Schmalflächen errechnet wird, sodass das Rundholz optimal ausgenützt wird, und an den fertig besäumten Lamellen keine Waldkanten mehr verbleiben. Dabei können die Trapezwinkel von Breit- und Stirnfläche variieren, jedoch müssen beide Konturen ein gleichschenkeliges Trapez bilden. Die Winkel der trapezförmigen Stirnflächen liegen insbesondere im Bereich von 30- 60°, bevorzugt bei etwa 45°.

Nach der Vermessung werden die unbesäumten Lamellen mit der rechten Seite- die vom Flächeninhalt größere Breitfläche- untenliegend und entlang der Mittellinie der errechneten Kontur ausgerichtet.
Die Besäumung der Schmalflächen erfolgt mit Hobelköpfen, die um die y- Achse drehbar sind, um verschiedene Trapezwinkel in den Stirnflächen zu fertigen. Um die konische Steigung der Breitfläche zu erhalten sind die Hobelköpfe hier wieder in der x- Achse verschiebbar, wobei die Vorschubgeschwindigkeit proportional der Längsgeschwindigkeit der Lamellen angepasst ist. Durch Veränderung des Vorschubes in x- Richtung verändert sich die Konizität in der Breitfläche. Daher wird bei der 3D- Messung neben der Konturen auch der dafür notwendige Vorschub für den Besäumzyklus vorgegeben. Mit Abschluss des Besäumvorganges ist eine trapezkonische Lamelle fertig bearbeitet.

Im Rahmen der Erfindung bevorzugt sind, wie oben beschriebene trapezkonische Lamellen gemäß Variante b), bei welchen nach, vorzugsweise längsmittiger, Längsteilung einer ganzen Lamelle gemäß oben beschriebener Variante a), senkrecht zu deren beiden Hauptebenen und deren beiden Endebenen die Lamelle in Form von zwei gemäß oben genannter Variante b) ausgebildeten Lamellen vorliegen.

Weiters ist es insbesondere im Hinblick auf jeweils weitere Verarbeitungsschritte günstig, wenn die schrägen Längs-Seitenflanke(n) der Lamellen jeweils in einem Winkel von 25 bis 70°, insbesondere von 30 bis 60°, zu den Hauptebenen der jeweiligen Lamelle geneigt ausgebildet sind.

Einen weiteren Gegenstand der Erfindung bildet ein mit den neuartigen Lamellen in direktem Bezug stehender Einsatz der neuen trapezkonischen Lamellen für - an sich letztlich übliche Bretter:
Demgemäß ist ein Brett, welches mit zwei Lamellen gemäß obiger Variante b) bzw. gemäß obigen Ausführungen erhältlich ist, auch ein weiteres wesentliches Objekt der Erfindung, wobei eine dieser beiden Lamellen - nach 180°-Verdrehung um eine in Richtung parallel zu deren beiden Hauptebenen verlaufende Drehachse - über ihre zu deren Hauptebenen im Winkel geneigten, schrägen Längs-Seitenflanken materialschlüssig miteinander verbunden, insbesondere verklebt, sind und das so gebildete Brett somit längs-durchgehend gleichbleibenden Rechteck-Querschnitt aufweist.

Diese neuen, über ihre schrägen Flankenflächen miteinander verbundenen Lamellen zeichnen sich jedoch einerseits in Folge einer Art "Sandwicheffekt" und anderseits in Folge der Baum-Längsfaser konformen Besäumung durch höhere Festigkeit aus, wobei jedoch einer gemeinsamen Mitverwendung von bisher bekannten, üblichen Brettern, z.B. in Mehr-Lamellen und -Bretterkonstrukten, nichts entgegensteht.

Die Produktion von Einzelbrettern aus trapezkonischen Lamellen kann direkt an deren Besäumung angeknüpft werden. Hiebei werden die Lamellen beispielsweise in der Mittellinie der Breitflächen mit einem Trennschnitt in zwei Halb-Trapezkonus-Lamellen längs zerteilt. Eine davon wird um 180° um die z- Achse gedreht, auf die Schmalfläche dieser Halb-Lamelle erfolgt der Leimauftrag. Die zweite Halb-Lamelle wird 180° um die y-Achse gedreht und mit der anderen Halb-Lamelle in einer Presseneinheit zusammengeführt, sodass beide Schmalflächen zusammenliegen. Die Verleimung erfolgt tragend. Während des Pressvorgangs wird ein Pressdruck in den Breitflächen und den Trennflächen der Lamellen eingeleitet, gegen Abgleiten der beiden Hälften gegeneinander werden die Stirnflächen abgestützt.
In diesem Fall ist die Produktion von parallelen Einzelbrettern unabhängig von der Konizität der Breit- und Stirnflächen der Lamellen, da immer ein zueinander parallele Flanken, die senkrecht zu den Breit- bzw. Hauptflächen verlaufen, aufweisendes Einzelbrett aus zwei Hälften der selben Lamelle verleimt ist.

Mit den neuen Brettern lassen sich im Rahmen der Erfindung selbstverständlich Endlos-Bretter erstellen, die mit, vorzugsweise über Flach- oder Vertikalkeilzinkverbindungen an den End- bzw. Stirnflächen längs aneinander geschlossenen, einzelnen Brettern, wie soeben beschrieben, gebildet sind.

Einen weiteren, ebenfalls in innigem Zusammenhang mit den neuen trapezkonischen Lamellen in Zusammenhang stehenden Gegenstand der vorliegenden Erfindung bildet eine neue Einschicht-Platte, welche in zwei Versionen vorliegen kann.

Gemäß einer ersten Version ist diese Platte, aus einer Mehrzahl von nebeneinander und parallel zueinander flächenbündig angeordneten und materialschlüssig über ihre Längs-Seitenflanken miteinander verbundenen Brettern dadurch gekennzeichnet, dass sie mit einer Mehrzahl von - mit über ihre schrägen Längs-Seitenflanken miteinander materialschlüssig verbundenen, insbesondere verklebten, Lamellen gebildeten - Brettern, wie oben beschrieben, gebildet ist.

Gemäß der zweiten Version ist die Einschicht-Platte mit Lamellen, **dadurch gekennzeichnet,** dass sie einen Plattenkörper mit über ihre schrägen Längs-Seitenflanken miteinander materialschlüssig verbundenen, abwechselnd längs-ausgerichteten, materialschlüssig miteinander verbundenen, insbesondere verklebten, Lamellen gemäß der weiter oben beschriebenen Variante a) gebildet umfassen, wobei vorgesehen ist, dass an die beiden äußeren, schrägen Seitenflanken an den beiden seitlichen Rändern des Plattenkörpers jeweils eine der beiden Lamellen gemäß oben genannter Variante b) mit ihrer schrägen Längs-Seitenflanke materialschlüssig gebunden, insbesondere geklebt, ist.

Des weiteren können mit den erfindungsgemäß mit den "Halb-Lamellen" gebildeten, neuartigen Brettern alleine und/oder kombiniert mit konventionellen Brettern, z.B. brettbreite Balken, erstellt werden, welche einen weiteren Gegenstand der vorliegenden Erfindung bilden.

Diese erfindungsgemäßen Balken mit einer Mehrzahl von aufeinander geschichteten, über ihre Hauptflächen materialschlüssig miteinander verbundenen Brettern zeichnen sich dadurch aus, dass sie mit einer Mehrzahl von jeweils über ihre Hauptflächen materialschlüssig aneinander gebundenen Brettern gemäß Anspruch 4 gebildet sind.

Einen weiteren wesentlichen, jedoch ebenfalls mit den neuen trapezkonischen Lamellen in innigem Zusammenhang stehenden Gegenstand der Erfindung bildet eine neue Mehrschicht-Platte, welche dadurch gekennzeichnet ist, dass sie mit einer Mehrzahl von flächig aufeinander liegenden, wie vorher beschriebenen, Einschicht-Platten gebildet ist und mit - mit denselben jeweils, insbesondere 1:1, abwechselnd angeordneten - bisher üblichen Einschicht-Platten mit einer Mehrzahl von über ihre senkrechten Längs-Seitenflanken aneinandergebundenen, üblichen Brettern oder Lamellenbrettern, wobei alle genannten Einschicht-Platten über ihre jeweiligen Platten-Hauptflächen materialschlüssig aneinander gebunden, insbesondere geklebt, sind, gebildet ist und wobei die, insbesondere 1:1, abwechselnd angeordneten, materialschlüssig flächig aneinander gebundenen Einschicht-Platten jeweils Faserungsverläufe der sie bildenden Bretter bzw. Lamellen aufweisen, welche im Wesentlichen jeweils zueinander senkrecht ausgerichtet sind.

Trapezkonische Lamellen bzw. daraus gebildete Einzelbretter werden, wie bisherige konische Lamellen zu einer Einschichtplatte verleimt. Alle Einschichtplatten- aus konischen bzw. trapezkonischen Lamellen und parallelen Einzelbrettern- werden beispielsweise in der Produktion von Brettschichtholz entweder als Querlage oder Längslage eingesetzt. Dabei empfiehlt es sich, die Einschichtplatten an den Stirnflächen mit einem Keilzinkenstoß zu einer Endlosplatte miteinander zu verbinden. Nach dem Verzinken wird das Endlosformat in den Breitflächen gehobelt. Die benötigten Längen für Längs- und Querlagen werden vom Endlosformat abgekappt und der Brettsperrholzproduktion je nach Sichtqualität entweder als Deck- oder Mittellage zugeführt.

Konische Lamellen und Einzelbretter aus trapezkonischen Lamellen können in der Brettsperrholzproduktion anstatt parallelprismierter Bretter als Querlage eingesetzt werden.

Überall, wo jetzt mit parallelprismierten Holzlamellen gearbeitet wird, können nun parallele Einzelbretter aus trapezkonischen Lamellen zur Steigerung der Zug- und Biegefestigkeit eingesetzt werden. So auch in der Brettsperrholzproduktion, wo die Einzelbretter mit einem Keilzinkenstoß endlos verbunden und wie bisher als Längslage eingesetzt werden. Weiter können parallele Einzelbretter auch in der Produktion von Brettschichtholz eingesetzt werden.

Prinzipiell ist zu den Eigenschaften von konischen bzw. trapezkonischen Lamellen aus "Seitenware" folgendes auszuführen:
Grundsätzlich weist die Seitenware gegenüber der Hauptware, die aus dem Kernbereich geschnitten wird, bessere Festigkeitseigenschaften bei Zug- und Biegebeanspruchung auf. Betrachtet man eine parallelprismierte Lamelle, so erkennt man unschwer, dass die Baumfasern von den Besäumkanten geschnitten werden. Durch die "angeschnittenen" Fasern verringert sich die Festigkeit der Lamellen.

Aufgrund der Produktionsmethoden von konischen- bzw. trapezkonischen Lamellen, angepasst an den Wachstumsverlauf und damit der Längsfaserung der Baumstämme, gelingt es, die Anzahl der "geschnittenen Fasern" zu senken.
Der Verlauf der Fasern ist großteils parallel zu den Besäumkanten einer konischen Lamelle.

Der Nachweis der besseren Zugfestigkeit von Einzelbrettern aus trapezkonischen Lamellen gegenüber parallelprismierten Lamellen aus derselben Seitenware ist in einem Prüfbericht Nr. PB14-470-1-01 der Uni Graz dargestellt. Dabei wurden von 50 Baumstämmen die äußersten Lamellen der Seitenware in drei Prüfkörper unterteilt, wobei alle Prüfkörper dieselbe Dimension besitzen.
Der Prüfkörper Z-REF ist die Referenzprobe und wird parallelprismiert aus Seitenlamellen zugeschnitten.
Der Prüfkörper Z- KO wird aus zwei konisch geschnittenen Lamellen (vom selben Stamm), verklebt über die den Schmalflächen, zugeschnitten. Die Anordnung der beiden konischen Lamellen ist hiebei "spiegelverkehrt".
Den Prüfkörper Z-KS bildet ein paralleles Einzelbrett aus einer trapezkonischen Lamelle. Alle drei Prüfkörper wurden aus einem Baumstamm geschnitten.
Der Vergleich der Prüfkörper erfolgte nach ÖNORM EN 4008:2012. Die Zugfestigkeit wurde für alle drei Prüfkörper nach ON- EN 14358 ermittelt. Dabei stellt sich heraus, dass die Z-KS- Prüfkörper- also die mit zwei Halb-Lamellen gebildeten parallelen Einzelbrettereinen höheren charakteristischen Kennwert der Zugfestigkeit aufweisen als parallelprismierte Lamellen.

Anhand der Zeichnung wird die Erfindung näher erläutert:
Es zeigen die Fig. 1 eine bisher übliche konische Lamelle und die Fig. 2 und 3 zwei mögliche Anordnungen derartiger üblicher konischer Lamellen im Zuge von deren gegenseitiger Aneinanderfügung und Verklebung zu einer Einschicht-Platte, die Fig. 4 eine erfindungsnahe, trapezoid-konische Lamelle mit Seitenflanken, welche noch die konvexe Krümmung des Baumstammes, aus welchem sie geschnitten ist, aufweist, die Fig. 5 den Vorgang der Erstellung der schrägen, selbst ebenen Längs-Seitenflanken der neuen, nun trapezkonischen, also erfindungsgemäßen bzw. erfindungsgemäß eingesetzten Lamelle, die Fig. 6 und 7 deren Draufsicht, und Querschnittsansicht, die Fig. 8 diese Lamelle in Schrägansicht, die Fig. 9 bis 12 den Vorgang bei der Herstellung eines Brettes aus zwei, durch Längsteilung einer Lamelle gemäß Fig. 9 erhaltenen "Halb-Lamellen", die Fig. 13 eine Einschichtplatte gemäß Anspruch 7 und die Fig. 14 und 15 zwei Arten von erfindungsgemäßen Mehrschichtplatten, beide jeweils in Schrägansicht.

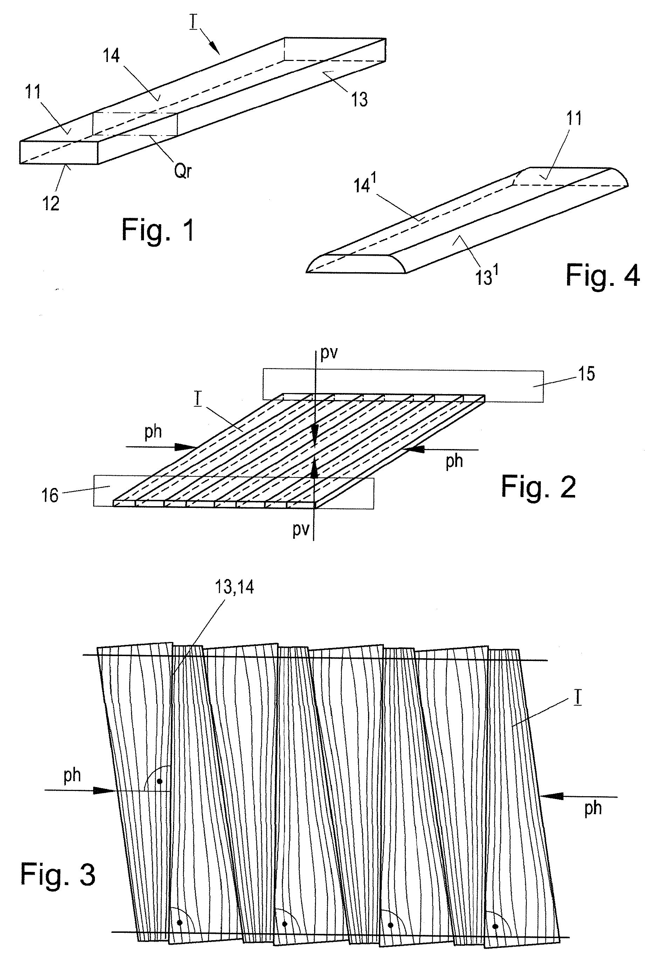

Die in Fig. 1 gezeigte konventionelle "konische" Lamelle I weist über ihre gesamte Längsstreckung von vorne nach hinten ansteigenden Rechteck-Querschnitt Qr auf, sie hat hier sichtseitig einen kleineren Rechteck-Querschnitt als rückseitig, die Seitenflankenflächen 13, 14, verlaufen senkrecht zu beiden - hier gleich großen - hochtrapez-förmigen, zueinander parallelen Breit- bzw. Hauptflächen 11, 12 dieser bisher bekannten konischen Lamelle I.

Den Fig. 2 und 3 sind zwei einander ähnliche Arten der Plattenherstellung aus, wie in Fig. 1 gezeigten, abwechselnd jeweils umgekehrt und richtig, hier gleich seitlich aneinanderliegenden, konischen Lamellen I, welche z.B. durch Druck von oben und unten, siehe pv, in Lagenposition gehalten über ihre Seitenflanken miteinander verklebt und durch beidseitig seitlichen Horizontal-Druck ph zu einer konventionellen Einschichtplatte verpresst werden, wobei gemäß Fig. 2 die rechteckigen Stirnflächen 15, 16 in einer Quer-Ebene angeordnet sind.

Gemäß Fig. 3 sind die 1:1 abwechselnd "umgekehrt" und "richtig" aneinander liegend angeordneten, konischen Lamellen I so angeordnet, dass jeweils jede zweite ihrer Seitenflanken 13, 14 in rechtem Winkel zu der beidseitigen horizontalen Druckausübungs-Richtung ph ausgerichtet ist.

Die Fig. 4 zeigt sozusagen die Rohform einer trapez-konischen Lamelle 1¹, wie sie nach Parallel-Längszerschneidung eines Baumstammes erhalten wird, und welche Längs-Seitenflanken 13¹, 14¹ aufweist, die noch die etwa zylindrische Krümmung der ursprünglichen Baumstamm-Oberfläche aufweist.

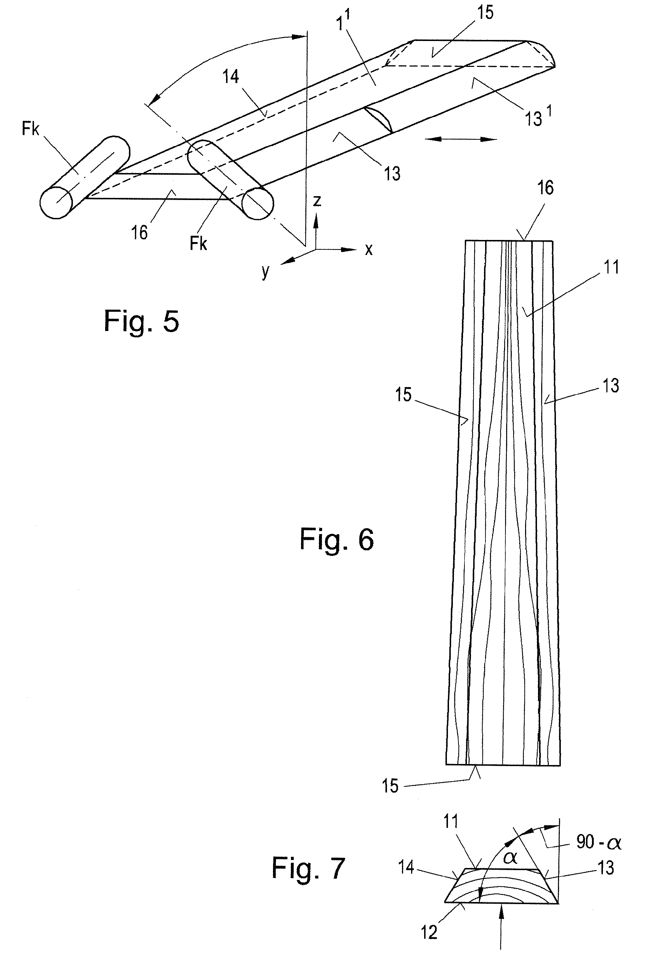

Die Fig. 5 zeigt, wie die konvex gekrümmten Seitenflanken der Rohlamelle 1¹ mittels Fräsköpfen Fk in ebene Seitenflanken 13, 14 übergeführt werden, womit eine, wie in Fig. 6 und 7 gezeigte trapezkonische Lamelle 1 mit größerer Trapez-Stirnfläche 15 an einem und kleinerer Trapez-Stirnfläche 16 am anderen Ende derselben erhalten wird, deren beiden Breit- bzw. Hauptflächen 11 und 12 zueinander parallel angeordnet sind und über die mit einem Winkel α zu denselben geneigten, symmetral schrägen Seitenflankenflächen 13, 14 miteinander verbunden sind.

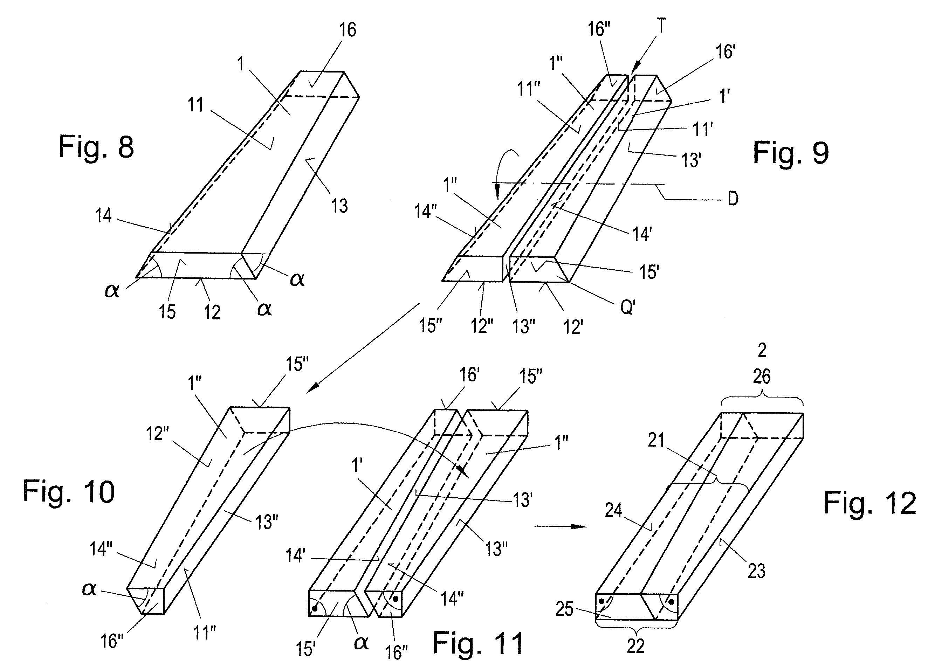

Die Fig. 8 zeigt - bei sonst gleichbleibenden Bezugszeichenbedeutungen - die Lamelle 1 in Schrägansicht.

Die Fig. 9 zeigt die gleiche Lamelle 1 - bei sonst gleichbleibenden Bezugszeichenbedeutungen - allerdings nach erfolgter längsmittiger "vertikaler" Teilung T, wodurch zwei - hier zueinander symmetrische - trapez-konische Halb-Lamellen 1', 1" mit jeweils ungleich-schenkeligen Trapez-Querschnitten Q', Q" gebildet werden. Die jeweiligen Flächenbezeichnungen derselben, nämlich 11', 11" bis 16', 16" sind völlig analog zu den Flächenbezeichnungen 11 bis 16 der Lamelle 1 gemäß Fig. 6.

In der Fig. 9 ist noch eine zu den Hauptflächen 11", 12" der (Halb-)Lamelle 1" parallele Drehachse D eingezeichnet, um welche diese Lamelle 1" um 180°, siehe Pfeil, gedreht wird und in die in Fig. 10 gezeigte "umgekehrte" Position gebracht wird.

Wieder durch einen Pfeil angedeutet ist wie die so "umgekehrte" Lamelle 1" über die in ihrer Position gemäß Fig. 9 verbliebene (Halb-)Lamelle 1' gehoben wird und, wie der Fig. 11 zu entnehmen, auf der Seite von deren schräger Seitenflankenfläche 13' mit ihrer jetzt "überhängenden" Seitenflanke 14" neben der Halb-Lamelle 1' abgelegt ist.

Schließlich wird eine der schrägen Seitenflankenflächen 13', 14" mit einem Bindemittel, also Klebstoff, versehen und nach seitlichem Zusammenführen und -fügen der beiden Halb-Lamellen 1', 1" wird, siehe Fig. 12, ein erfindungsgemäßes Brett 2 mit Hauptflächen 21, 22, zu denselben senkrechten Seitenflanken 23, 24 und Stirn- bzw. Endflächen 25, 26, welches jeweils über seine gesamte Länge gleichbleibenden (Gesamt-)Rechteck-Querschnitt hat, erhalten.

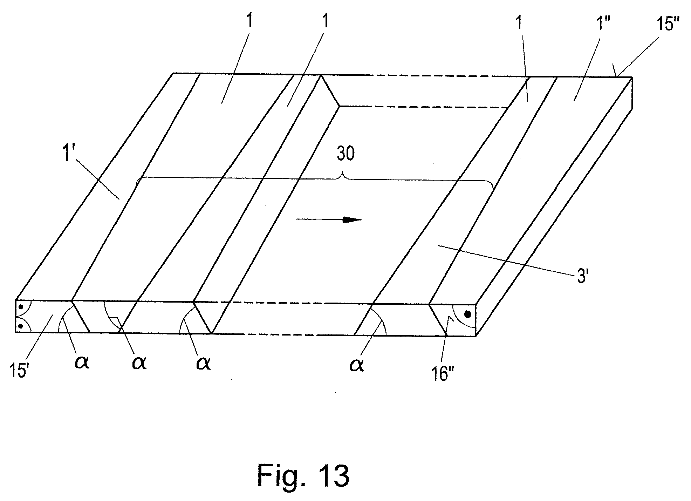

Bei sonst gleich bleibenden Bezugszeichenbedeutungen ist in Fig. 13 gezeigt, wie der Kernbereich bzw. Plattenkörper 30 einer Einschichtplatte 3' gemäß Anspruch 7 aus abwechselnd "richtig" und "umgekehrt" angeordneten trapez-konischen Lamellen gebildet ist, und wie jeweils beidseitig seitlich jeweils eine wie aus den Fig. 9 bis 12 hervorgehende (Halb-)Lamelle 1', 1" angeordnet ist.

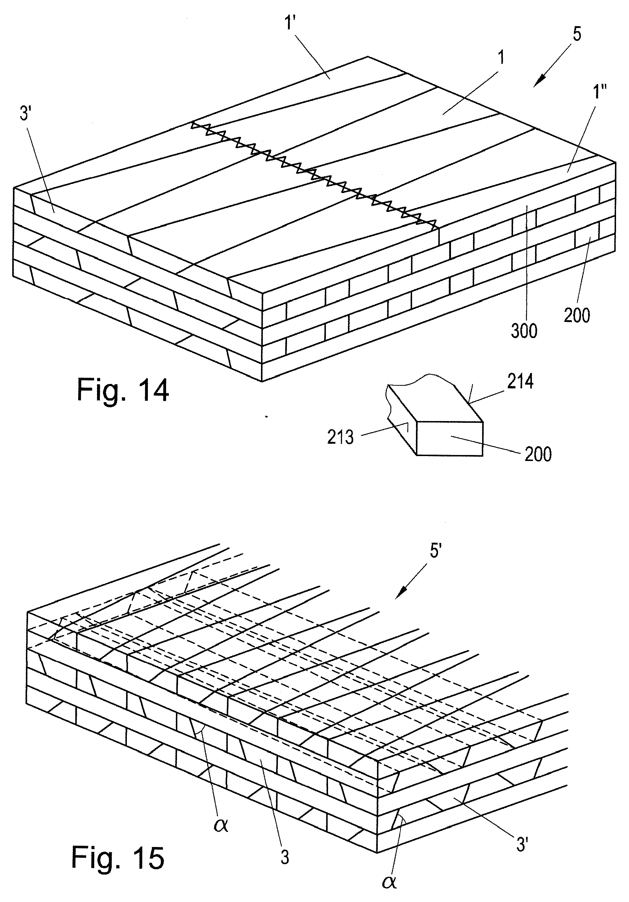

Die Fig. 14 zeigt - bei sonst gleichbleibenden Bezugszeichenbedeutungen - eine erfindungsgemäße Mehrschicht-Platte 5, die mit einer Mehrzahl von miteinander durch übliche Verzinkung an den End- bzw. Stirnflächen ihrer trapez-konischen Lamellen 1' entsprechenden Einschicht-Platten 3' und einer Mehrzahl von mit den Einschicht-Platten 3' 1:1 abwechselnd mit quer ausgerichteten, bisher üblichen Brettern 200 gebildeten, bisher üblichen Einschicht-Platten 300 gebildet ist, wobei die Faserungsverläufe in den Einschichtplatten 3', 300 im Wesentlichen senkrecht zueinander ausgerichtet sind.

Schließlich zeigt die Fig. 15 - bei sonst gleichbleibenden Bezugszeichenbedeutungen - ebenfalls eine erfindungsgemäße Mehrschicht-Platte 5' mit einer Einschichtplatte 3 gemäß Anspruch 6 und einer solchen gemäß Anspruch 4 aus jeweils zwei Halb-Lamellen 1', 1" gemäß Fig. 12 gebildeten Brettern 2 in Längslage, welche einander abwechselnd mit, wie in Fig. 13 gezeigten Einschicht-Platten 3' mit Lamellen 1 und (Halb-)Lamellen 1', 1" miteinander flächig verleimt sind.

## Patentansprüche

1. Lamellen aus Naturholz mit durch geradlinig aufeinander zulaufende Längs-Seitenflanken begrenzten hochtrapez-förmigen, zueinander parallelen Breit- bzw. Hauptebenen, **dadurch gekennzeichnet, dass**
deren beide zueinander parallele Hauptebenen (11, 12; 11', 12', 11", 12"), von den aufeinander zulaufenden Längs-Seitenflanken (13, 14; 13', 14", 13", 14) begrenzt, die Form von einander geometrisch ähnlichen, a) gleichschenkeligen, oder b) ungleichschenkeligen Trapezen aufweisen, wobei die Lamellen entweder a) als Lamellen (1) mit zueinander symmetrischen, in identen, spitzen Winkeln (α) jeweils zu den genannten Hauptebenen (11, 12) geneigten, schrägen Längs-Seitenflanken (13, 14), vorliegen und insgesamt längs-durchgehend, im Querschnitt die Form von geometrisch ähnlichen, gleichschenkeligen Trapezen aufweisen, oder b) als Lamellen (1', 1") mit jeweils einer in einem spitzen Winkel (α) zu den Hauptebenen (11', 12'; 11", 12") geneigten, schrägen Seitenflanke (13', 14") und einer im rechten Winkel zu den genannten Hauptebenen, angeordneten senkrechten Längs-Seitenflanke (14', 13") vorliegt und insgesamt längs-durchgehend im Querschnitt die Form von geometrisch ähnlichen, ungleichschenkeligen Trapezen ("Halb-Trapezen") aufweisen.

2. Lamelle nach Anspruch 1, Variante b), **dadurch gekennzeichnet, dass** sie - nach, vorzugsweise längsmittiger, Längsteilung einer Lamelle (1) gemäß Anspruch 1, Variante a) - senkrecht zu deren beiden Hauptebenen (11, 12) und deren beiden Endebenen (15, 16) in Form von zwei gemäß Anspruch 1, Variante b) ausgebildeten Lamellen (1', 1 ") vorliegt.

3. Lamelle nach Anspruch 1 oder 2, **dadurch gekennzeichnet, dass** die schrägen Längs-Seitenflanke(n) (13, 14; 13', 14") der Lamellen (1; 1', 1") jeweils in einem Winkel (α) von 25 bis 70°, insbesondere von 30 bis 60°, zu den Hauptebenen (11, 12; 11', 12', 11", 12") der jeweiligen Lamelle (1; 1', 1 ") geneigt ausgebildet sind.

4. Brett (2), **dadurch gekennzeichnet, dass** es mit zwei Lamellen (1', 1") gemäß Anspruch 1, Variante 1b) oder Anspruch 2 gebildet ist, wobei eine dieser beiden Lamellen (1', 1") nach 180°-Verdrehung um eine in Richtung parallel zu deren beiden Hauptebenen (11', 12') verlaufende Drehachse (D) über ihre zu deren Hauptebenen (11', 12', 11", 12") im Winkel (α) geneigten, schrägen Längs-Seitenflanken (13', 14") materialschlüssig miteinander verbunden, insbesondere verklebt, sind und das Brett (2) somit längs-durchgehend gleichbleibenden Rechteck-Querschnitt aufweist.

5. Endlos-Brett (2'), **dadurch gekennzeichnet, dass** es mit, vorzugsweise über Flach- oder Vertikalkeilzinkverbindungen an ihren End- bzw. Stirnflächen (25, 26), längs aneinander geschlossenen, einzelnen Brettern (2) gemäß Anspruch 4 gebildet ist.

6. Einschicht-Platte (3) aus einer Mehrzahl von nebeneinander und parallel zueinander flächenbündig angeordneten und materialschlüssig über ihre Längs-Seitenflanken miteinander verbundenen Brettern, **dadurch gekennzeichnet, dass** sie mit einer Mehrzahl von - mit über ihre schrägen Längs-Seitenflanken (23, 24) miteinander materialschlüssig verbundenen, insbesondere verklebten, Lamellen (1', 1") gebildeten - Brettern (2) gemäß Anspruch 4 gebildet ist.

7. Einschicht-Platte (3') mit Lamellen (1), **dadurch gekennzeichnet,**
- **dass** sie einen Plattenkörper (30) mit über ihre schrägen Längs-Seitenflanken (13, 14) miteinander materialschlüssig verbundenen, abwechselnd längs-ausgerichteten, materialschlüssig miteinander verbundenen, insbesondere verklebten, Lamellen (1) gemäß Anspruch 1, Variante a), gebildet ist, und
- **dass** an die beiden äußeren, schrägen Seitenflanken an den beiden seitlichen Rändern des Plattenkörpers (30) jeweils eine der beiden Lamellen (1', 1") gemäß Anspruch 1, Variante b), oder Anspruch 2, mit ihrer schrägen Längs-Seitenflanke (13', 14") materialschlüssig gebunden, insbesondere geklebt, ist.

8. Balken (4) mit einer Mehrzahl von aufeinander geschichteten, über ihre Hauptflächen materialschlüssig miteinander verbundenen Brettern, **dadurch gekennzeichnet, dass** derselbe mit einer Mehrzahl von jeweils über ihre Hauptflächen (21, 22) materialschlüssig aneinander gebundenen Brettern (2) gemäß Anspruch 4 gebildet ist.

9. Mehrschicht-Platte (5), **dadurch gekennzeichnet, dass** sie mit einer Mehrzahl von Einschicht-Platten (3 oder 3') gemäß Anspruch 6 oder 7 und - mit denselben jeweils, insbesondere 1:1, abwechselnd angeordneten - üblichen Einschicht-Platten (300) mit einer Mehrzahl von über ihre senkrechten Längs-Seitenflanken (213, 214) aneinandergebundenen, üblichen Brettern (200) gebildet ist, wobei alle genannten Einschicht-Platten über ihre jeweiligen Platten-Hauptflächen materialschlüssig aneinander gebunden, insbesondere geklebt, sind, gebildet sind und wobei die, insbesondere 1:1, abwechselnd angeordneten, materialschlüssig flächig aneinander gebundenen Einschicht-Platten (3, 3'; 300) jeweils Faserungsverläufe der sie bildenden Bretter bzw. Lamellen aufweisen, welche im Wesentlichen jeweils zueinander senkrecht ausgerichtet sind.
